# EUROPÄISCHE PATENTSCHRIFT

(11) **EP 3 849 387 B1**
(45) Veröffentlichungstag und Bekanntmachung des Hinweises auf die Patenterteilung: **26.03.2025**
(21) Anmeldenummer: 19778429.1
(22) Anmeldetag: 04.09.2019
(51) Int. Cl.: A47J 31/44, A47J 31/60, B65F 1/14

(54) **ABSCHLAGBEHÄLTER**
KNOCK BOX
RÉCIPIENT D'ÉJECTION

(30) Priorität: 10.09.2018 DE 202018105164 U
(43) Veröffentlichungstag der Anmeldung: 21.07.2021
(73) Patentinhaber: JK eCom GmbH, 97525 Schwebheim (DE)
(72) Erfinder: KÖNIGER, Jan, 97525 Schwebheim (DE)
(74) Vertreter: Freischem & Partner Patentanwälte mbB
(86) Internationale Anmeldenummer: PCT/EP2019/073586
(87) Internationale Veröffentlichungsnummer: WO 2020/053046

(56) Entgegenhaltungen:
- WO-A1-2018/074660
- FR-A1- 2 567 011
- FR-A1- 2 567 011
- GB-A- 2 485 329
- GB-A- 2 485 329
- "Zehn Abschlagboxen im Test", CREMA, vol. 5, no. 2015, 1 November 2015 (2015-11-01), pages 58 - 61, XP055241082
- "Zehn Abschlagboxen im Test", CREMA, vol. 5, no. 2015, 1 November 2015 (2015-11-01), pages 58 - 61, XP055241082

## Beschreibung

Die Erfindung betrifft einen Abschlagbehälter zum Abschlagen von Kaffeesatz aus einem Siebträger.

Aus dem Stand der Technik, beispielsweise der GB 2 485 329 A oder der Zeitschrift "Crema", Bd. 5, 2015, Seiten 58-61, "Zehn Abschlagboxen im Test", sind Abschlagbehälter zum Abschlagen von Kaffeesatz aus einem Siebträger bekannt. Derartige Abschlagbehälter werden beispielsweise auch als Knockbox oder Abklopfkasten bezeichnet. Sie dienen dazu, den Kaffeesatz aus einem Siebträger einer Kaffeemaschine aufzufangen, wenn der Siebträger gegen eine horizontal im Abschlagbehälter angeordnete Stange geschlagen wird. Beim Auftreffen des Siebträgers auf die Stange wird der Kaffeesatz aufgrund seiner Massenträgheit aus dem Siebträger geschleudert und von dem Abschlagbehälter aufgefangen, während der Siebträger von der Stange zurückprallt.

Die nach dem Stand der Technik bekannten Abschlagbehälter weisen den Nachteil auf, dass die horizontal im Abschlagbehälter angeordnete Stange sowohl beim Abschlagen des Kaffeesatzes als auch beim Ausleeren des Abschlagbehälters mit Kaffeesatz verschmutzt wird. Hierdurch sind die nach dem Stand der Technik bekannten Abschlagbehälter umständlich auszuleeren und zu reinigen.

Aus der FR 2 567 011 A1 ist ein Abschlagbehälter bekannt, bei dem die Prallfläche auf der Wandung des Abschlagbehälters angeordnet ist. Ein derartiger Abschlagbehälter weist jedoch den Nachteil auf, dass beim Auftreffen auf die Wandung die Krafteinleitung in die Unterlage des Abschlagbehälters am äußeren Rand der Standfläche des Abschlagbehälters erfolgt. Es besteht daher ein hohes Risiko, dass der Abschlagbehälter aufgrund des Abschlagvorgangs umgekippt. Auch befindet sich das beim Abschlagen äußerst nahe am Rand des Abschlagbehälters. Beides führt zu einem erheblichen Risiko des Verschmutzens des Umfelds des Abschlagbehälters.

Auch sind aus der Zeitschrift "Crema", Bd. 5, 2015, Seiten 58-61, "Zehn Abschlagboxen im Test" oder der WO 2018/074660 Abschlagbehälter bekannt, bei denen eine horizontale Stange durch eine von der Wandung des Abschlagbehälters zum Inneren des Abschlagbehälters hin vorspringende Aufnahme abgestützt wird.

Der Erfindung liegt daher die Aufgabe zugrunde, einen Abschlagbehälter aufzuzeigen, der gegenüber dem Stand der Technik leichter zu reinigen und zu leeren ist.

Die Aufgabe wird gelöst durch einen Abschlagbehälter mit den Merkmalen des Anspruchs 1. Die Merkmale der abhängigen Ansprüche betreffen vorteilhafte Ausführungsformen.

Der Abschlagbehälter weist einen Boden und eine sich vom Boden weg erstreckende Wandung zur seitlichen Begrenzung des Innenraums des Abschlagbehälters auf. Die vorstehend beschriebene Aufgabe wird nun dadurch gelöst, dass der Abschlagbehälter eine im Bereich der Wandung des Abschlagbehälters angeordnete Prallfläche aufweist.

Die Anordnung der Prallfläche im Bereich der Wandung des Abschlagbehälters ermöglicht es, dass sich beim Abschlagen des Kaffeesatzes keine störenden Elemente im Bereich der "Flugbahn" des Kaffeesatzes befinden. Auch müssen keine Elemente im Abschlagbehälter angeordnet sein, die beim Ausleeren des Abschlagbehälters wesentliche Bereiche der Öffnung des Abschlagbehälters überspannen und so ein Ausleeren des Abschlagbehälters verhindern.

Der Abschlagbehälter weist keine horizontal angeordnete Stange auf. Die im Bereich der Wandung angeordnete Prallfläche macht diese entbehrlich.

Die Prallfläche kann, zumindest im Wesentlichen, horizontal orientiert sein. Eine horizontal orientierte Prallfläche hat zum einen den Vorteil, dass sie eine komfortable Führung der Bewegung beim Abschlagen des Siebträgers ermöglicht. Weiterhin ist eine, zumindest im Wesentlichen, horizontale Orientierung der Prallfläche von Vorteil, da eine derart orientierte Prallfläche dafür geeignet ist, von dem Siebträger in einer Abwärtsbewegung getroffen zu werden. Das Auftreffen des Siebträgers auf die Prallfläche in einer Abwärtsbewegung bewirkt, dass der Kaffeesatz den Siebträger in einer ebenfalls abwärts gerichteten Bewegung verlässt. Hierdurch wird der Kaffeesatz zuverlässig vom Abschlagbehälter aufgefangen und die Gefahr, dass Kaffeesatz den Abschlagbehälter verfehlt und so dessen Umgebung verschmutzt, minimiert.

Unter einer zumindest im Wesentlichen horizontal orientierten Prallfläche ist in diesem Zusammenhang insbesondere eine Prallfläche zu verstehen, die nicht exakt horizontal orientiert ist, sich jedoch immer noch für das Auftreffen des Siebträgers in einer abwärts gerichteten Bewegung auf die Prallfläche eignet.

Im Zusammenhang mit der vorliegenden Anmeldung sind die Begriffe "horizontal" und "vertikal" sowie sämtliche aus diesen Begriffen abgeleiteten Richtungsangaben, wie "abwärts", so zu verstehen, dass sie sich auf den mit seinem Boden nach unten weisend auf einer horizontalen Fläche abgestellten Abschlagbehälter beziehen.

Der Abschlagbehälter weist unterhalb der Prallfläche einen gegenüber der Wandung zum Inneren des Abschlagbehälters hin vorspringenden Unterstützungsbereich auf.

Ein derartiger Unterstützungsbereich hat den Vorteil, dass er die Prallfläche beim Aufprall des Siebträgers abstützen kann. Hierdurch kann eine stabile Konstruktion gewährleistet werden, die das Abschlagen auch mit hoher Wucht und schweren Siebträgern erlaubt.

Der Unterstützungsbereich erstreckt sich dabei in vorteilhafter Weise bis zum Boden des Abschlagbehälters. Dies ermöglicht es, dass der Impuls des Aufpralls bis zum Boden des Abschlagbehälters weitergeleitet wird. Darüber hinaus werden so Hinterschneidungen vermieden, was sowohl im Hinblick auf die Reinigung, als auch im Hinblick auf die Fertigung des Abschlagbehälters von Vorteil ist.

Der Unterstützungsbereich kann als Hohlprofil gestaltet sein. Eine derartige Gestaltung des Unterstützungsbereichs ermöglicht es, den Unterstützungsbereich leicht und dennoch stabil auszuführen. Das Hohlprofil ist insbesondere zum Inneren des Abschlagbehälters hin geschlossen. Eine derartige Gestaltung hat den Vorteil, dass sich durch die geschlossene Ausführung des Hohlprofils keine schwer zu reinigenden Konturen zum Innenraum hin ausbilden.

Die Prallfläche kann an einem Prallelement angeordnet sein, das an einem Grundkörper des Abschlagbehälters aufgenommen ist. Hierbei kann das Prallelement insbesondere als separates Bauteil gefertigt sein. Dies hat den Vorteil, dass das Prallelement aus einem von dem Werkstoff des Grundkörpers verschiedenen Werkstoff gefertigt sein kann. Dies ermöglicht eine optimierte Werkstoffauswahl für Grundkörper und Prallelement.

Das Prallelement kann an seiner von der Prallfläche abgewandten Seite eine an den Grundkörper des Abschlagbehälters angepasste Kontur aufweisen. Die Kontur ist hierbei insbesondere an den Unterstützungsbereich des Abschlagbehälters angepasst. Eine derartig angepasste Kontur ermöglicht ein präzises Anbringen des Prallelements an den Grundkörper.

Der Abschlagbehälter, insbesondere der Grundkörper, kann als Kunststoffspritzgussteil ausgeführt sein. Beispielsweise kann der Grundkörper aus einem ABS-Kunststoff gefertigt sein.

Der Werkstoff des Prallelements ist bevorzugt ein Werkstoff mit einer niedrigeren Shore-A-Härte als der Grundkörper. Der Werkstoff des Prallelements kann beispielsweise ein thermoplastisches Polyurethan sein. Ein derartiger Werkstoff ermöglicht es, dass das Prallelement dämpfend im Hinblick auf das Geräusch beim Auftreffen des Siebträgers auf die Prallfläche wirkt.

Die Wandung des Abschlagbehälters kann eine oberhalb der Prallfläche angeordnete Ausnehmung aufweisen. Dies hat den Vorteil, dass sich beim Auftreffen des Siebträgers auf die Prallfläche der Siebträger, insbesondere mit seinem Griff, im Bereich der Ausnehmung befinden kann. In diesem Bereich stört dann keine Wandung die Abschlagbewegung. Außerhalb des Bereichs der Prallfläche kann sich die Wandung dann hingegen über die Prallfläche hinaus in die Höhe erstrecken und so dazu beitragen, dass der Kaffeesatz sicher vom Inneren des Abschlagbehälters aufgenommen wird.

Der Abschlagbehälter kann ein unterhalb des Bodens des Abschlagbehälters angeordnetes rutschhemmendes und/oder schlagdämpfendes Element aufweisen. Ein derartiges Element verbessert den sicheren Stand des Abschlagbehälters. Das rutschhemmende und/oder schlagdämpfende Element kann ringförmig gestaltet sein. Der Werkstoff des rutschhemmenden und/oder schlagdämpfenden Elements kann thermoplastisches Polyurethan sein. Ein derartiges rutschhemmendes und/oder schlagdämpfendes Element verbessert den sicheren Stand des Abschlagbehälters. Zudem kann durch das Element die Übertragung der Energie bzw. des Impulses auf die Unterlage des Abschlagbehälters vermindert werden.

Die Prallfläche kann sich von der Wandung zur Mitte des Abschlagbehälters hin in horizontaler Richtung über höchstens 80 % des Abstands von der Wandung zur Mitte des Abschlagbehälters erstrecken. Insbesondere kann sie sich über höchstens 65 % dieses Abstands erstrecken. Im Falle eines Abschlagbehälters mit in horizontaler Ebene, zumindest im Wesentlichen, kreisrundem Querschnitt, verläuft der Abstand von der Wandung zur Mitte, bei der es sich in dem Fall um den Mittelpunkt des entsprechenden Kreises handelt, entlang der radialen Richtung zum Mittelpunkt. Der Vorteil dieser Ausgestaltung ist, dass der Bereich in der Mitte des Abschlagbehälters frei bleibt, so dass dieser für den Kaffeesatz zur Verfügung steht, der so ungehindert den Siebträger verlassen kann.

Die Erfindung wird im Folgenden anhand der Figuren 1 bis 8 schematisch näher erläutert. Es zeigen:
- Fig. 1: eine Seitenansicht eines Grundkörpers eines beispielhaften Abschlagbehälters,
- Fig. 2: eine weitere Seitenansicht des Grundkörpers aus einer anderen Richtung,
- Fig. 3: eine Draufsicht des Grundkörpers,
- Fig. 4: eine Seitenansicht eines Prallelements des beispielhaften Abschlagbehälters,
- Fig. 5: eine Seitenansicht des Prallelements aus einer anderen Richtung,
- Fig. 6: eine Draufsicht des Prallelements,
- Fig. 7: eine Seitenansicht des Abschlagbehälters und
- Fig. 8: eine Draufsicht des Abschlagbehälters.

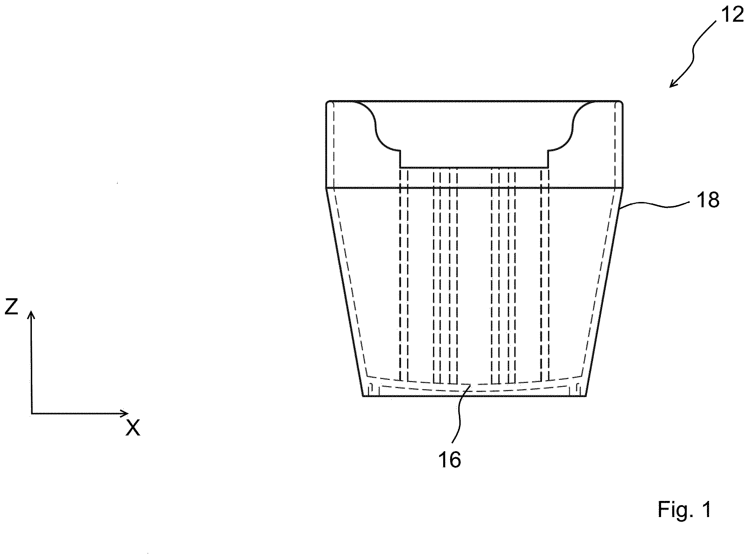

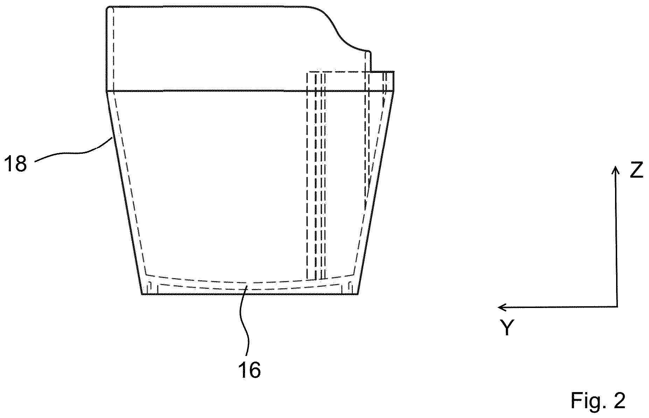

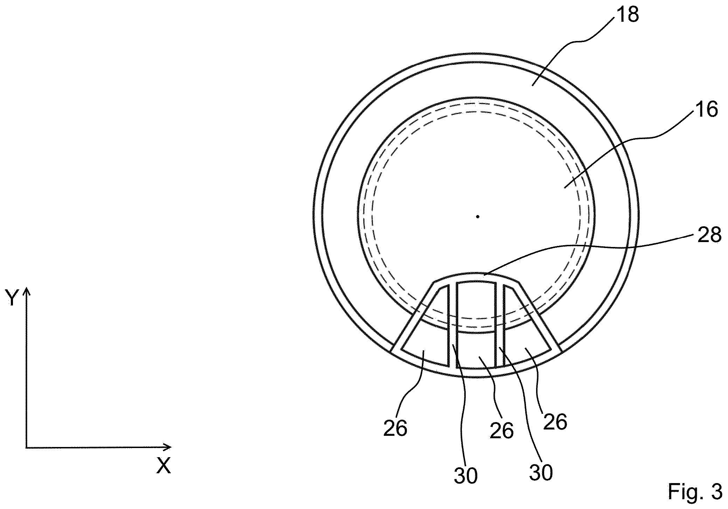

Der beispielhafte Abschlagbehälter 10 kann wie im gezeigten Beispiel einen Grundkörper 12 und ein, insbesondere als separates Bauteil gefertigtes, Prallelement 14 aufweisen. Der beispielhafte Grundkörper 12 ist in den Figuren 1 bis 3 dargestellt. In den Darstellungen sind verdeckte Kanten als gestrichelte Linien angedeutet.

Der Grundkörper 12 weist einen Boden 16 und eine sich vom Boden 16 weg erstreckende Wandung 18 zur seitlichen Begrenzung des Innenraums des Abschlagbehälters 10 auf.

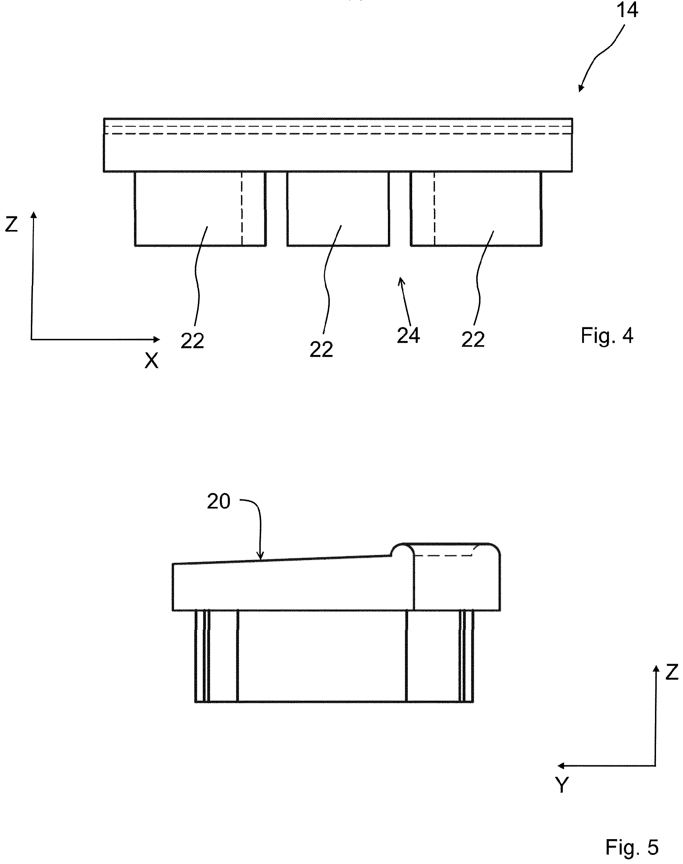

Das in den Figuren 4 bis 6 dargestellte Prallelement 14 stellt die Prallfläche 20 des Abschlagbehälters 10 zur Verfügung. In den Darstellungen sind verdeckte Kanten als gestrichelte Linien angedeutet.

An seiner von der Prallfläche 20 abgewandten Seite weist das Prallelement 14 eine an den Grundkörper 12 des Abschlagbehälters 10 angepasste Kontur 24 auf. Diese kann - wie im gezeigten Beispiel - durch einen oder eine Mehrzahl Vorsprünge 22 realisiert sein.

Im gezeigten Beispiel greifen die Vorsprünge 22 in Hohlräume 26 ein, wenn das Prallelement 14 am Grundkörper 12 aufgenommen wird.

Der Grundkörper 12 kann wie im gezeigten Beispiel einen als Hohlprofil gestalteten Unterstützungsbereich 28 aufweisen. Dieser kann sich insbesondere bis zum Boden 16 erstrecken. Im gezeigten Beispiel bildet die hohlprofilartige Gestaltung des Unterstützungsbereichs 28, die im gezeigten Ausführungsbeispiel beispielhaft zwei vertikale Verstärkungsstege 30 aufweist, wenigsten einen Hohlraum, im gezeigten Beispiel insbesondere drei Hohlräume 26, unterhalb der Prallfläche 20 aus.

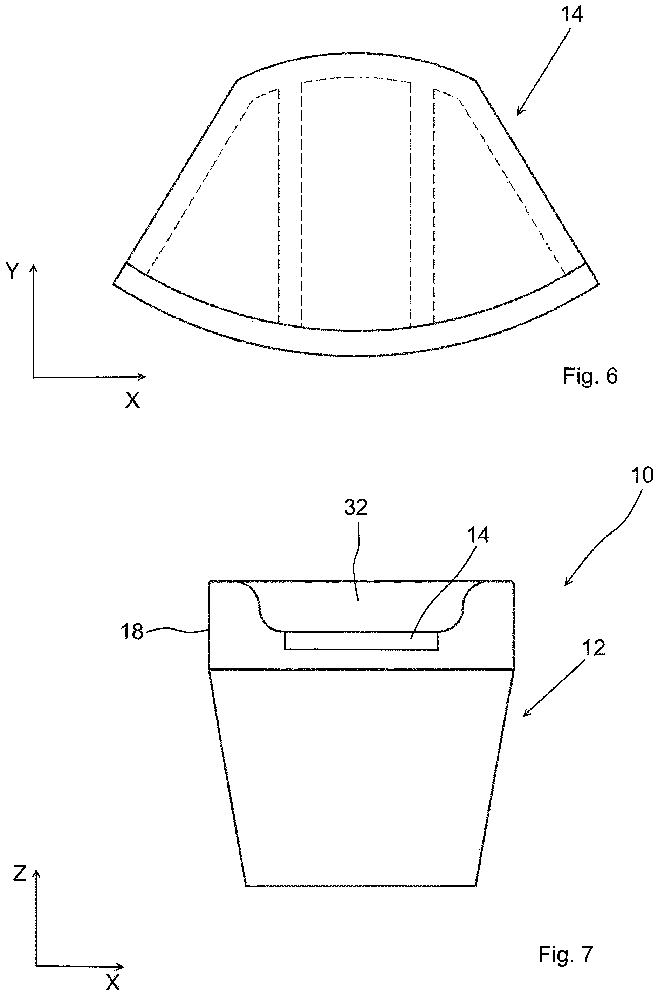

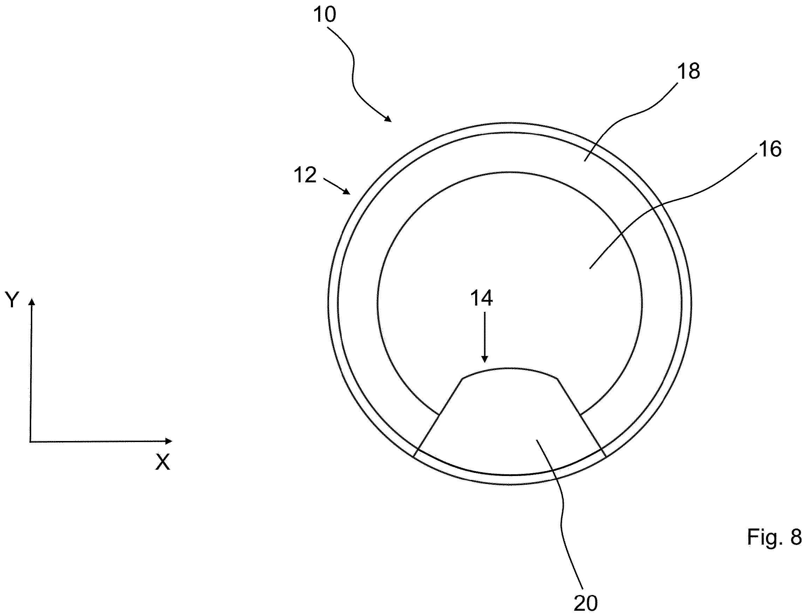

In den Fig. 7 und 8 sind Ansichten des Abschlagbehälters 10 mit am Grundkörper 12 aufgenommenem Prallelement 14 dargestellt. Bei diesen beiden Abbildungen sind lediglich die sichtbaren Kanten als Linien dargestellt. Zu erkennen ist, dass die Wandung 18 eine Ausnehmung 32 oberhalb der Prallfläche 20 aufweist. Die Ausnehmung 32 erleichtert es, den Siebträger auf die Prallfläche 20 zu schlagen.

Die in der vorliegenden Beschreibung, in den Zeichnungen sowie in den Ansprüchen offenbarten Merkmale der Erfindung können sowohl einzeln als auch in Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 10: Abschlagbehälter
- 12: Grundkörper
- 14: Prallelement
- 16: Boden
- 18: Wandung
- 20: Prallfläche
- 22: Vorsprung
- 24: Kontur
- 26: Hohlraum
- 28: Unterstützungsbereich
- 30: Steg
- 32: Ausnehmung

## Patentansprüche

1. Abschlagbehälter (10) zum Abschlagen von Kaffeesatz aus einem Siebträger, wobei der Abschlagbehälter (10) einen Boden (16) und eine sich vom Boden (16) weg erstreckende Wandung (18) zur seitlichen Begrenzung des Innenraums des Abschlagbehälters (10) aufweist, wobei der Abschlagbehälter (10) eine im Bereich der Wandung (18) des Abschlagbehälters (10) angeordnete Prallfläche (20) aufweist, wobei der Abschlagbehälter (10) keine horizontal angeordnete Stange aufweist,
**dadurch gekennzeichnet,**
**dass** der Abschlagbehälter (10) unterhalb der Prallfläche (20) einen Unterstützungsbereich (28) zum Abstützen der Prallfläche (20) aufweist, wobei der Unterstützungsbereich (28) gegenüber der Wandung (18) zum Inneren des Abschlagbehälters (10) hin vorspringt.

2. Abschlagbehälter (10) nach Anspruch 1, **dadurch gekennzeichnet, dass** die Prallfläche (20), zumindest im Wesentlichen, horizontal orientiert ist.

3. Abschlagbehälter (10) nach einem der vorigen Ansprüche, **dadurch gekennzeichnet, dass** sich der Unterstützungsbereich (28) bis zum Boden (16) des Abschlagbehälters (10) erstreckt.

4. Abschlagbehälter (10) nach einem der vorigen Ansprüche, **dadurch gekennzeichnet, dass** der Unterstützungsbereich (28) als Hohlprofil gestaltet ist.

5. Abschlagbehälter (10) nach einem der vorigen Ansprüche, **dadurch gekennzeichnet, dass** die Prallfläche (20) an einem Prallelement (14) angeordnet ist, das an einem Grundkörper (12) des Abschlagbehälters (10) aufgenommen ist, insbesondere wobei das Prallelement (14) als separates Bauteil gefertigt ist.

6. Abschlagbehälter (10) nach Anspruch 5, **dadurch gekennzeichnet, dass** das Prallelement (14) aus einem von dem Werkstoff des Grundkörpers (12) verschiedenen Werkstoff gefertigt ist.

7. Abschlagbehälter (10) nach einem der vorigen Ansprüche, **dadurch gekennzeichnet, dass** der Abschlagbehälter (10), insbesondere der Grundkörper (12), ein Kunststoffspritzgussteil ist.

8. Abschlagbehälter (10) nach einem der vorigen Ansprüche, **dadurch gekennzeichnet, dass** der Abschlagbehälter (10), insbesondere der Grundkörper (12), aus einem ABS-Kunststoff hergestellt ist.

9. Abschlagbehälter (10) nach einem der Ansprüche 5 bis 8, **dadurch gekennzeichnet, dass** das Prallelement (14) aus einem thermoplastischen Polyurethan hergestellt ist.

10. Abschlagbehälter (10) nach einem der vorigen Ansprüche, **dadurch gekennzeichnet, dass** die Wandung (18) eine oberhalb der Prallfläche (20) angeordnete Ausnehmung (32) aufweist.

11. Abschlagbehälter (10) nach einem der vorigen Ansprüche, **dadurch gekennzeichnet, dass** der Abschlagbehälter (10) ein unterhalb des Bodens (16) des Abschlagbehälters (10) angeordnetes rutschhemmendes und/oder schlagdämpfendes Element aufweist.

12. Abschlagbehälter (10) nach einem der vorigen Ansprüche, **dadurch gekennzeichnet, dass** sich die Prallfläche (20) von der Wandung (18) zur Mitte des Abschlagbehälters (10) hin in horizontaler Richtung über höchstens 80 %, vorzugsweise über höchstens 65 %, des Abstands von der Wandung (18) zur Mitte hin erstreckt.

## Claims

1. Knock box (10) for knocking off coffee grounds from a portafilter, wherein the knock box (10) has a base (16) and a wall (18), which extends away from the base (16) and is intended for delimiting the interior of the knock box (10) laterally, wherein the knock box (10) has an impact surface (20) arranged in the region of the wall (18) of the knock box (10), wherein the knock box (10) has no horizontally arranged bar,
**characterized in that**
beneath the impact surface (20), the knock box (10) has a supporting region (28) for supporting the impact surface (20), wherein the supporting region (28) projects opposite the wall (18) in the direction of the interior of the knock box (10).

2. Knock box (10) according to claim 1, **characterized in that** the impact surface (20) is oriented at least substantially horizontally.

3. Knock box (10) according to one of the preceding claims, **characterized in that** the supporting region (28) extends to the base (16) of the knock box (10).

4. Knock box (10) according to one of the preceding claims, **characterized in that** the supporting region (28) is configured in the form of a hollow profile.

5. Knock box (10) according to one of the preceding claims, **characterized in that** the impact surface (20) is arranged on an impact element (14) which is accommodated on a main body (12) of the knock box (10), in particular wherein the impact element (14) is manufactured as a separate component.

6. Knock box (10) according to claim 5, **characterized in that** the impact element (14) is manufactured from a material which is different from the material of the main body (12).

7. Knock box (10) according to one of the preceding claims, **characterized in that** the knock box (10), in particular the main body (12), is a plastic injection moulded part.

8. Knock box (10) according to one of the preceding claims, **characterized in that** the knock box (10), in particular the main body (12), is produced from an ABS plastic.

9. Knock box (10) according to one of claims 5 to 8, **characterized in that** the impact element (14) is produced from a thermoplastic polyurethane.

10. Knock box (10) according to one of the preceding claims, **characterized in that** the wall (18) has a recess (32) arranged above the impact surface (20).

11. Knock box (10) according to one of the preceding claims, **characterized in that** the knock box (10) has a slip-resistant and/or shock-absorbing element arranged beneath the base (16) of the knock box (10).

12. Knock box (10) according to one of the preceding claims, **characterized in that** the impact surface (20) extends horizontally from the wall (18) in the direction of the centre of the knock box (10) over at most 80%, preferably at most 65%, of the distance from the wall (18) to the centre.

## Revendications

1. Récipient de décantation (10) pour décanter du marc de café en provenance d'un porte-filtre, le récipient de décantation (10) comprenant un fond (16) et une paroi (18) qui s'étend dans une direction s'éloignant du fond (16) et qui permet de délimiter latéralement l'espace intérieur du récipient de décantation (10), le récipient de décantation (10) comprenant une surface d'impact (20) disposée dans la région de la paroi (18) du récipient de décantation (10), le récipient de décantation (10) ne comprenant pas de barre agencée horizontalement,
**caractérisé en ce que**
le récipient de décantation (10) comprend en-dessous de la surface d'impact (20) une région de soutien (28) permettant de soutenir la surface d'impact (20), la région de soutien (28) faisant saillie vers l'intérieur du récipient de décantation (10) par rapport à la paroi (18).

2. Récipient de décantation (10) selon la revendication 1, **caractérisé en ce que** la surface d'impact (20) est, au moins pour l'essentiel, orientée horizontalement.

3. Récipient de décantation (10) selon l'une des revendications précédentes, **caractérisé en ce que** la région de soutien (28) s'étend jusqu'au fond (16) du récipient de décantation (10).

4. Récipient de décantation (10) selon l'une des revendications précédentes, **caractérisé en ce que** la région de soutien (28) est réalisée sous la forme d'un profilé creux.

5. Récipient de décantation (10) selon l'une des revendications précédentes, **caractérisé en ce que** la surface d'impact (20) est disposée sur un élément d'impact (14) qui est reçu sur un corps de base (12) du récipient de décantation (10), en particulier l'élément d'impact (14) étant fabriqué en tant que composant séparé.

6. Récipient de décantation (10) selon la revendication 5, **caractérisé en ce que** l'élément d'impact (14) est fabriqué à partir d'un matériau qui diffère du matériau du corps de base (12).

7. Récipient de décantation (10) selon l'une des revendications précédentes, **caractérisé en ce que** le récipient de décantation (10), en particulier le corps de base (12), est une pièce en plastique moulée par injection.

8. Récipient de décantation (10) selon l'une des revendications précédentes, **caractérisé en ce que** le récipient de décantation (10), en particulier le corps de base (12), est fabriqué en plastique ABS.

9. Récipient de décantation (10) selon l'une des revendications 5 à 8, **caractérisé en ce que** l'élément d'impact (14) est fabriqué à partir d'un polyuréthane thermoplastique.

10. Récipient de décantation (10) selon l'une des revendications précédentes, **caractérisé en ce que** la paroi (18) comprend un évidement (32) agencé au-dessus de la surface d'impact (20).

11. Récipient de décantation (10) selon l'une des revendications précédentes, **caractérisé en ce que** le récipient de décantation (10) comprend un élément antidérapant et/ou amortisseur de chocs agencé sous le fond (16) du récipient de décantation (10).

12. Récipient de décantation (10) selon l'une des revendications précédentes, **caractérisé en ce que** la surface d'impact (20) s'étend à partir de la paroi (18) vers le centre du récipient de décantation (10) dans la direction horizontale sur un maximum de 80 %, de manière préférée sur un maximum de 65 %, de la distance entre la paroi (18) et le centre.
